# EUROPÄISCHE PATENTSCHRIFT

(11) **EP 3 426 545 B1**
(45) Veröffentlichungstag und Bekanntmachung des Hinweises auf die Patenterteilung: **28.07.2021**
(21) Anmeldenummer: 17712718.0
(22) Anmeldetag: 07.03.2017
(51) Int. Cl.: B62D 59/04

(54) **ANTRIEBSEINHEIT UND ANTRIEBSVERFAHREN**
DRIVE UNIT AND DRIVING METHOD
UNITÉ D'ENTRAÎNEMENT ET PROCÉDÉ D'ENTRAÎNEMENT

(30) Priorität: 08.03.2016 DE 202016101279 U
(43) Veröffentlichungstag der Anmeldung: 16.01.2019
(73) Patentinhaber: Alois Kober GmbH, 89359 Kötz (DE)
(72) Erfinder: ECKLE, Volker, 89183 Holzkirch (DE); LEINAUER, Joachim, 87755 Kirchhaslach (DE); STÖTTER, Stephan, 86479 Aichen (DE); CZESCHNER, Daniel Andre, 87727 Babenhausen (DE)
(74) Vertreter: Ernicke, Moritz
(86) Internationale Anmeldenummer: PCT/EP2017/055334
(87) Internationale Veröffentlichungsnummer: WO 2017/153413

(56) Entgegenhaltungen:
- EP-A2- 2 669 157
- WO-A1-2009/023931
- DE-A1- 19 614 752
- DE-A1-102006 009 862
- DE-U1-202009 008 905

## Beschreibung

Die Erfindung betrifft eine Antriebseinheit und ein Antriebsverfahren für einen Hilfsantrieb eines Fahrzeugs mit den Merkmalen im Oberbegriff des Verfahrens- und Vorrichtungshauptanspruchs.

Eine solche Antriebseinheit ist aus der DE 20 2009 008 905 U1 bekannt. Das elektromotorische Antriebsmittel ist außerhalb der Achse und des Achskörpers angeordnet und treibt über eine quer zum Radschwinghebel angeordnete Gelenkwelle ein Zahnrad auf der Felge des Fahrzeugrads an. Die DE 196 14 752 zeigt eine Antriebseinheit mit einem auf dem Radschwinghebel angeordneten Motor und einem quer zum Radschwinghebel erstreckten Antriebsstrang.

Bei der Antriebseinheit der WO 2009/023931 A1 treibt ein zentral und getrennt von der Achse am Chassis montierter Hydraulikmotor die Fahrzeugräder mit quer zu den Radschwinghebeln ausgerichteten Halbwellen an.

Die DE 10 2006 009862 A1 befasst sich mit einer Antriebseinheit für einen Fahrradanhänger, deren Motor innenseitig am Chassis montiert ist, wobei die zweiarmigen Achsschwingen an dünnen, massiven und vom Chassis nach außen ragenden Tragstangen gelagert sind.

Aus der WO 2006/061177 A1, der EP 2 138 387 A1 und der EP 2 669 157 A2 sind Rangierantriebe für abgekuppelte Anhänger bekannt, deren Antriebsmittel außerhalb der Achse am Chassis oder einer Querstrebe angeordnet sind und eine auf das Fahrzeugrad einwirkende Reibwalze antreiben.

Aus der EP 1 840 019 A2 ist eine andere Antriebseinheit bekannt, bei der das motorische Antriebsmittel auf einem Schlitten am Fahrzeugchassis längsverschieblich angeordnet ist und ein Zahnritzel aufweist, das gegen ein mit der Bremstrommel verbundenes Zahnrad angestellt wird. Das Fahrzeugrad ist bei dieser und den vorgenannten Schriften auf einem am Schwinghebelende starr befestigten Achszapfen drehbar gelagert.

Es ist Aufgabe der vorliegenden Erfindung, eine bessere Antriebstechnik aufzuzeigen.

Die Erfindung löst diese Aufgabe mit den Merkmalen im Verfahrens- und Vorrichtungshauptanspruch.
Die beanspruchte Antriebstechnik, d.h. die Antriebseinheit, das Antriebsverfahren, die Achse, der Hilfsantrieb und das damit ausgerüstete Fahrzeug, haben verschiedene Vorteile.

Die Antriebseinheit weist ein Achse zugeordnetes und im Innenraum eines hohlen Achskörpers angeordnetes Antriebsmittel und einen sich entlang des Radschwinghebels erstreckenden Antriebsstrang auf.

Die Antriebseinheit baut klein und kompakt. Sie kann Drehbewegungen des Radschwinghebels folgen. Der Antriebsstrang hat keine oder nur sehr geringe kinematische Einbußen. Das vorzugsweise motorische, insbesondere elektromotorische, Antriebsmittel treibt über den bevorzugt als Getriebestrang ausgebildeten Antriebsstrang das Treibmittel drehend an, welches seinerseits mit dem Fahrzeugrad verbunden ist und dieses drehend antreibt.

Das Treibmittel zur Übertragung der Antriebskräfte auf das Fahrzeugrad kann in unterschiedlicher Weise ausgebildet und angeordnet sein. Vorzugsweise ist es als zentrale Antriebswelle des Fahrzeugrads ausgebildet. Die Antriebswelle kann am Radschwinghebel gelagert und mit dem Fahrzeugrad drehschlüssig, z.B. über die Radnabe, verbunden sein. Sie kann über ihre Wellenlagerung das Fahrzeugrad am Radschwinghebel abstützen.

Das Antriebsmittel ist im Innenraum eines hohlen Achskörpers, angeordnet. Hierbei ist es vorteilhaft, wenn der Antriebsstrang sich innenseitig durch den hohlen Radschwinghebel erstreckt. Ferner ist es günstig, wenn der Antriebsstrang abtriebsseitig mit der zentralen Antriebswelle des Fahrzeugrads wirkverbunden ist.

Der Antriebsstrang ist mit einem drehbar am Radschwinghebel gelagerte internen oder externen Treibelement verbunden. Das Treibelement kann in der vorerwähnten Weise als drehbare und mit dem Fahrzeugrad drehschlüssig verbundene zentrale Antriebswelle ausgebildet sein, die an einer außen liegenden Stelle mit dem Antriebsstrang verbunden ist. Das Treibelement kann alternativ eine Treibverbindung mit der Radfelge, der Bremstrommel oder einem anderen Teil des Fahrzeugrads bieten. Das Fahrzeugrad kann in diesen Fällen drehbar auf einem Achszapfen gelagert sein, der mit dem Radschwinghebel starr verbunden ist.

Der Antriebsstrang ist in den verschiedenen Ausführungsvarianten um eine Lagerachse einer Radschwinghebellagerung am Achskörper drehbar ausgebildet und angeordnet. Ein außenseitig am Radschwinghebel angeordneter Antriebsstrang kann z.B. von einem umlaufenden endlosen Getriebestrang, z.B. einem Ketten-, Seil- oder Riementrieb, gebildet werden. Das Antriebsrad kann konzentrisch zur Lagerachse des Schwinghebels am Achskörper und/oder am Schwinghebel drehbar gelagert sein. Das Abtriebsrad kann mit dem Treibelement verbunden sein. Dieses kann gemäß der vorgenannten Varianten als zentrale und nabenschlüssige Antriebswelle des Fahrzeugrads oder in anderer Weise ausgebildet sein.

Die integrierte Ausbildung und Anordnung der Antriebseinheit mit einem im Antriebskörper angeordneten Antriebsmittel und einem im hohlen Radschwinghebel angeordneten Antriebsstrang hat besondere Vorteile. Sie baut besonders kompakt und störungsfrei und ist gegen äußere Umgebungseinflüsse geschützt. Das Gewicht insgesamt und insbesondere die ungefederten Massen können klein gehalten werden.

Besondere Vorteile ergeben sich in Verbindung mit einem als zentrale und nabenschlüssige Antriebswelle ausgebildeten Treibelement. Die vorstehenden Vorteile geltend hierfür entsprechend. Alternativ kann das Treibelement in anderer Weise ausgebildet sein und teilweise außerhalb des Radschwinghebels angeordnet sein. Die Treibverbindung mit dem Fahrzeugrad kann dann ebenfalls in anderer Weise hergestellt werden, z.B. über die Radfelge oder die Bremstrommel.

Die beanspruchte Antriebstechnik ist kostengünstig und kommt mit einem geringen Platzbedarf sowie Bau- und Montageaufwand aus. Sie ist außerdem wartungs- und bedienungsfreundlich sowie betriebssicher.

Die beanspruchte Antriebstechnik kann bei Chassis oder Fahrzeugen herstellerseitig bei der Erstaurüstung eingebaut werden. Sie lässt sich aber auch an vorhandenen Chassis oder Fahrzeugen hersteller- oder kundenseitig nachrüsten, z.B. durch Austausch einer konventionellen Fahrzeugachse gegen eine erfindungsgemäße Achse. Die beanspruchte Antriebstechnik kann aber auch in bestehende Achskonzepte integriert und ggf. durch deren Umbau nachgerüstet werden. Dabei kann evtl. nur der Radschwinghebel getauscht oder umgebaut werden.

Zudem ergeben sich Vorteile für eine störungsfreie Kombination der Antriebseinheit mit einer Federung der Achse bzw. der Räder. Hierbei kann auf gängige Achsfederungen, z.B. Gummi- oder Drehstabfederung, Schrauben- oder Luftfederung und ggf. auch auf Niveauregulierungen zurückgegriffen werden. Der Adaptionsaufwand ist gering.

Die Antriebseinheit kann eine Aktivierungseinrichtung zum bedarfsweisen Aktivieren und Deaktivieren einer Antriebsverbindung mit dem Fahrzeugrad aufweisen. Hierdurch kann bei einem anderweitigen Antrieb des Fahrzeugrads, z.B. im Fahr- und Gespannbetrieb eines Anhängers, die Antriebsverbindung deaktiviert werden, um die Antriebseinheit zu entlasten und zu schützen. Die Antriebseinheit kann z.B. in einen Freilauf geschaltet werden oder mitlauffähig ausgebildet sein. Ferner kann eine Wegfahrsperre oder Diebstahlsicherung realisiert werden.

Die Aktivierungseinrichtung kann die Antriebsverbindung vorzugsweise gesteuert aktivieren und deaktivieren. Sie kann hierbei in einen Fahrbetrieb, einen Freilaufbetrieb und eine Blockierstellung für eine Wegfahrsperre geschaltet werden. Vorteilhaft ist eine Zuordnung der Aktivierungseinrichtung zum Antriebsstrang, insbesondere wenn dieser mehrere Strangstufen aufweist, wobei eine dieser Strangstufen gesteuert aktiviert und deaktiviert werden kann.

Vorteilhaft ist eine Ausbildung des Antriebsstrangs als Getriebestrang mit mehreren Getriebestufen, wobei eine Getriebestufe aktiviert und deaktiviert werden kann. Die Aktivierungseinrichtung weist ein Aktivierungsmittel auf, das einer solchen Strangstufe bzw. Getriebestufe zugeordnet sein kann. Besonders günstig ist die Ausbildung eines Aktivierungsmittels als Schieberad oder Schieberitzel mit einem Stellantrieb. Das Aktivierungsmittel kann geschützt im hohlen Radschwinghebel untergebracht werden. Besonders günstig ist hierbei eine Ausbildung des Antriebsstrangs als Zahnradgetriebe.

Die Aktivierungsvorrichtung kann auch zu anderen Zwecken benutzt werden, insbesondere zum An- und Abkuppeln eines für mehrere Antriebseinheiten gemeinsamen Antriebsmittels. Beim An- und Abkuppeln können die Antriebsstränge dieser Antriebseinheiten bedarfsweise aktiviert bzw. angekuppelt oder deaktiviert bzw. abgekuppelt werden. Hierüber kann durch einseitige Antriebsverbindung mit einem linken und einem rechten Fahrzeugrad eine Kurvenfahrt, ein Wenden oder eine Geradeausfahrt eines damit ausgerüsteten Fahrzeugs bewirkt werden.

Mehrere Antriebseinheiten können zu einem Hilfsantrieb für ein Fahrzeug zusammengefasst werden. Sie können einzeln oder gemeinsam von einer Steuerung beaufschlagt werden sowie ggf. einzeln oder gemeinsam aktiviert oder deaktiviert werden. Sie können außerdem einzeln oder gemeinsam von einer Betätigungseinrichtung, insbesondere einer drahtlosen Fernbedienung, betätigt und gesteuert werden. Über eine Fernbedienung mit Monitor oder eine andere Anzeige können Zustands- oder Bedienmeldungen oder andere Informationen uni- oder bidirektional übermittelt werden. Eine mit eigener Intelligenz ausgerüstete Fernbedienung, z.B. ein Smartphon, Tablet oder dgl., ermöglicht einen Betrieb mit Apps.

Mit getrennten linken und rechten Antriebseinheiten an einem Fahrzeug kann ein besonders komfortabler Fahr- und Rangierbetrieb erfolgen. Hierbei können die Antriebseinheiten und ihre jeweils eigenen Antriebsmittel selektiv angesteuert werden, was ein Fahren geradeaus und mit beliebigen Kurvenradien in Vorwärts- und Rückwärtsfahrt sowie ein besondert komfortables und feinfühliges Lenken des Fahrzeugs im Fahr- und Rangierbetrieb ermöglicht.

Ferner können Sicherheitsvorkehrungen für den Betrieb getroffen sein. Die Antriebseinheit bzw. der Hilfsantrieb lässt sich z.B. nicht im Anhänger-Gespannbetrieb bzw. in Fahrt oder in angekuppeltem Zustand eines Anhängers und nicht aus einem Zugfahrzeug durch Fernbedienung aktivieren und betätigen. Eine Anzeige am Fahrzeug und ggf. an einer Fernbedienung signalisiert dem Bediener den Aktivierungszustand der Antriebseinheit bzw. des Hilfsantriebs und vermeidet Fehlbedienungen. Andererseits kann eine automatische Deaktivierung der Antriebseinheit(en) durch Detektion eines Ankuppel- oder Fahrzustands eines Anhängers bewirkt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Seitenansicht eines Fahrzeugs mit einer Achse, einer Antriebseinheit und einem Hilfsantrieb,
- Figur 2:: eine Draufsicht auf das Fahrzeug von Figur 1,
- Figur 3:: einen abgebrochenen Schnitt durch eine Achse und ein Rad des Fahrzeugs durch eine aktivierte Antriebseinheit,
- Figur 4:: die Anordnung von Figur 3 mit einer deaktivierten Antriebseinheit,
- Figur 5:: eine vergrößerte Darstellung der Antriebseinheit,
- Figur 6 und 7:: eine Variante der Achse und der Antriebseinheit in verschiedenen perspektivische Ansichten,
- Figur 8:: eine andere perspektivische Ansicht von Figur 6 ohne Radschwinghebel,
- Figur 9:: einen Längsschnitt durch die Anordnung von Figur 6 in einer Freilaufstellung,
- Figur 10:: eine abgebrochene und vergrößerte Ansicht von Figur 9 in Fahrstellung und
- Figur 11:: eine abgebrochene und vergrößerte Ansicht von Figur 9 in Sperrstellung.

Die Erfindung betrifft eine Antriebseinheit (3,4) für einen Hilfsantrieb (2) eines Fahrzeugs (1). Sie betrifft außerdem ein Antriebsverfahren sowie einen mit einer oder mehreren Antriebseinheiten (3,4) ausgerüsteten Hilfsantrieb (2). Ferner betrifft die Erfindung eine Achse (12) eines Fahrzeugs (1) mit einer oder mehreren Antriebseinheiten (3,4) bzw. mit einem Hilfsantrieb (2). Schließlich betrifft die Erfindung auch ein Fahrzeug (1) mit einer solchen Achse (12) bzw. mit einem Hilfsantrieb (2) .

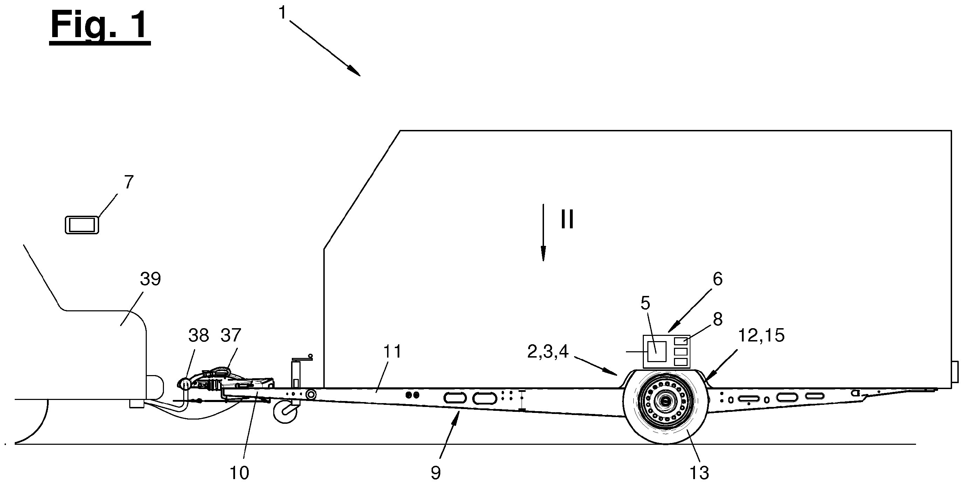

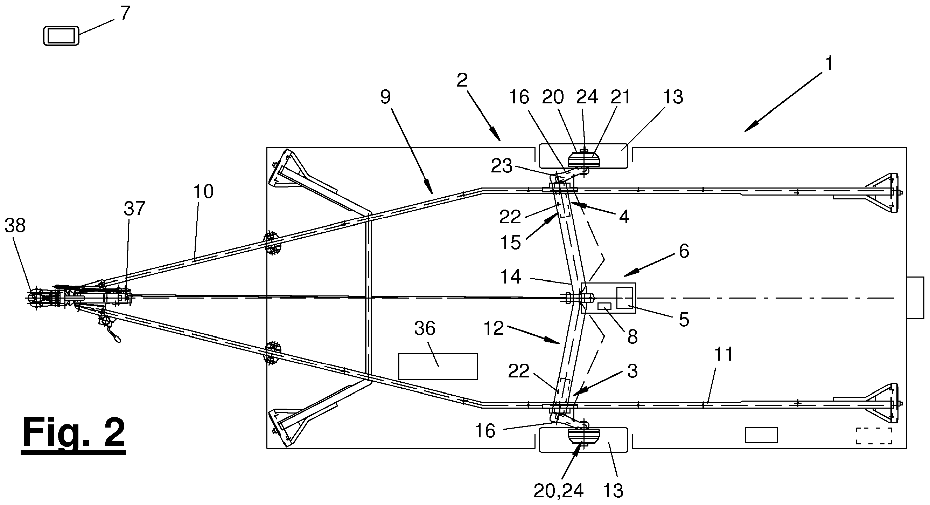

Das Fahrzeug (1) weist mindestens eine Achse (12) und mehrere Räder (13) auf. Das Fahrzeug (1) ist vorzugsweise als Straßenfahrzeug ausgebildet. Es ist außerdem vorzugsweise als fremdbewegtes Fahrzeug, insbesondere als Anhänger, ausgebildet, das für den normalen Fahrbetrieb keinen eigenen Fahrantrieb aufweist und von einem ankuppelbaren Zugfahrzeug (39) oder von einer anderen externen Antriebsvorrichtung fremdbewegt wird. Figur 1 und 2 zeigen die bevorzugte Fahrzeugausführung als Anhänger für den Straßenverkehr.

Die nachstehenden Merkmale zur Ausgestaltung des Anhängers (1) gelten in entsprechender Anpassung auch für andere Arten von Fahrzeugen (1), insbesondere Straßenfahrzeugen.

Der Anhänger (1) weist ein Fahrgestell oder Chassis (9) mit einem in Figur 1 angedeuteten Fahrzeugaufbau auf. Das Chassis (9) weist einen oder mehrere Längsträger (11) und eine frontseitige Deichsel (10) sowie ggf. einen oder mehrere Querträger auf. Die Quer- und Längsträger (11) bestehen vorzugsweise aus Metallprofilen. Die Deichsel (10) ist vorzugsweise als starre V-Deichsel ausgebildet. Alternativ kann es sich um eine Rohrdeichsel oder auch um eine beweglich mit dem Fahrgestell (9) verbundene Schwenkdeichsel handeln. Am vorderen Ende der Deichsel (10) ist eine Anhängerkupplung (38) angeordnet. Figur 1 zeigt den Anhänger (1) in Ankuppelstellung an einem Zugfahrzeug (39) und ein hierdurch gebildetes Gespann.

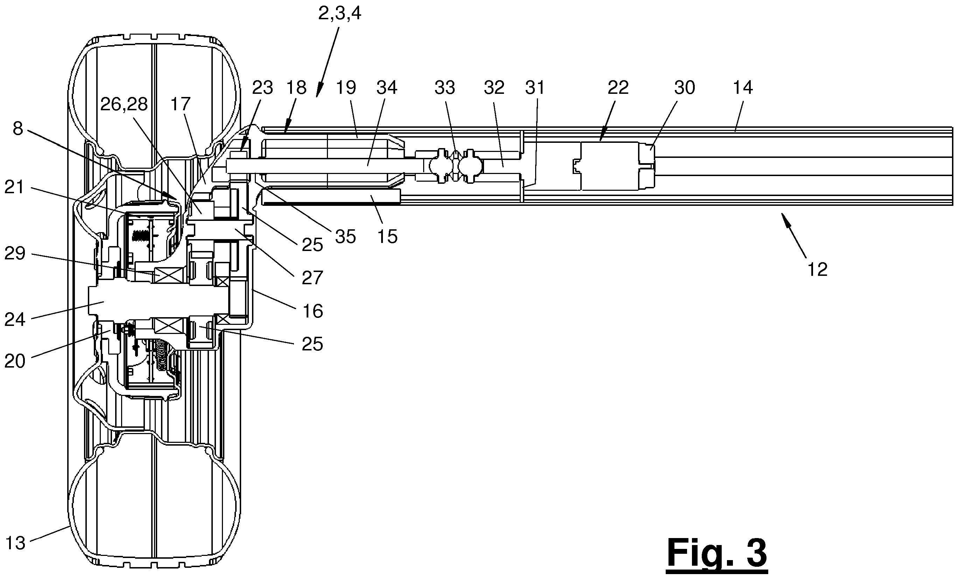

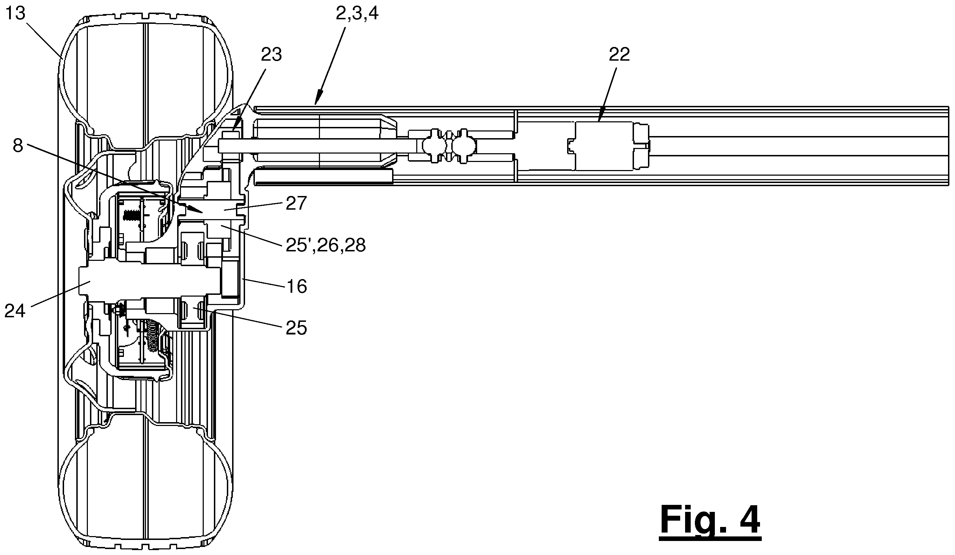

Der Anhänger (1) weist eine oder mehrere Achsen (12) bzw. Fahrzeugachsen auf. Die Achse (12) ist vorzugsweise als Radlenkerachse ausgebildet. Dies kann z.B. eine in Figur 2 gezeigte Schräglenkerachse oder eine Längslenkerachse gemäß Figur 3 bis 5 sein. Die Achse (12) weist einen Achskörper (14) und ggf. eine Federung (15) und Dämpfung auf.

Am Achskörper (14) ist ein Radschwinghebel (16) mittels einer Lagerung (18) drehbar gelagert. Die Lagerachse erstreckt sich vorzugsweise parallel zur Zentralachse des Achskörpers (14) bzw. fällt mit dieser zusammen. Der Radschwinghebel (16) weist ein Gehäuse (17) auf, das z.B. außerhalb des Achskörpers (14) sowie zwischen Chassis (9) und Fahrzeugrad (13) angeordnet ist.

Der Achskörper (14) ist in den gezeigten Ausführungsbeispielen innenseitig zumindest bereichsweise hohl ausgebildet und kann z.B. als Achsrohr ausgeführt sein. Alternativ ist eine massive Achsausbildung möglich. Der Radschwinghebel (16) kann innen oder außen am Achskörper (14) drehbar gelagert (18) sein. In den Zeichnungen ist eine innere Lagerung (18) mit einem bevorzugt hohlen Lagerzapfen (19) gezeigt, der am oberen Endbereich des Radschwinghebels (16) bzw. Gehäuses (17) befestigt ist und in die Achsöffnung ragt. Der Lagerzapfen (19) kann am Gehäuse (17) angeformt sein.

Die Federung (15) ist z.B. als Gummifederung mit im Achsrohr (14) eingelegten Gummischnüren ausgebildet. Sie liegen in Nuten zwischen dem profilierten Achsmantel und dem ebenfalls außenseitig Lagerzapfen (19) und bilden auch einen Teil der Lagerung (18).

Alternativ oder zusätzlich kann eine andere Federung (15), z.B. eine Luftfederung, Schraubenfederung, Drehstabfederung oder dgl., vorhanden sein. Der Radschwinghebel (16) kann dabei in anderer Weise am Achskörper (14) oder am Chassis (9) drehbar gelagert sein. Für eine Luftfederung oder Schraubenfederung kann z.B. der Radschwinghebel (16) am anderen freien Ende einen abstehenden Ansatz oder Sockel zum dortigen Anschluss einer Luftfeder oder Schraubenfeder bzw. Spiralfeder aufweisen. Der Absatz oder Sockel kann an das Gehäuse (17) angeformt sein und eine Hebelverlängerung in dessen Längsrichtung bilden. Die zwischen Rad (13) und Chassis (9) bevorzugt aufrecht angeordnete Luftfeder oder Schraubenfeder kann andererseits am Chassis (9) in geeigneter Weise abgestützt sein, z.B. durch einen vom Längsträger (11) seitlich abstehenden Stützflansch.

In den gezeigten Ausführungsbeispielen erstreckt sich der Achskörper (14) über die Breite des Fahrgestells (9) und weist an beiden Enden jeweils einen Radschwinghebel (16) auf. Der Achskörper (14) kann eine gerade Form, z.B. für eine Längslenkerachse, oder eine gebogene Form, z.B. für die in Figur 2 gezeigte Schräglenkerachse, aufweisen. In einer anderen und nicht dargestellten Ausführungsform kann die Achse (12) als Halbachse oder Stummelachse ausgebildet sein, wobei an deren Achskörper (14) nur an einer Seite ein Radschwinghebel (16) angeordnet ist.

Der Achskörper (14) ist in den verschiedenen Varianten mit dem Fahrzeugaufbau oder mit dem Chassis (9), insbesondere ein oder mehreren Längsträgern (11), in geeigneter Weise fest verbunden, z.B. durch einen Achsbock. Der oder die Radschwinghebel (16) tragen am freien Ende jeweils ein oder mehrere Fahrzeugräder (13). Diese werden jeweils von einem Reifen mit einer Felge gebildet und werden an einer Radnabe (20) mit Schrauben lösbar befestigt.

Der Anhänger (1) kann eine Bremseinrichtung (37) und Radbremsen (21) aufweisen. Die Bremseinrichtung (37) kann eine Betriebsbremse und ggf. eine Feststellbremse aufweisen, die mit den Radbremsen (21), z.B. Trommelbremsen, verbunden sind. Die Betriebsbremse kann als Auflaufbremse ausgeführt sein und kann mit einer der Anhängerkupplung (38) zugeordneten Auflaufeinrichtung verbunden sein. Alternativ sind andere Bremsgestaltungen, z.B. als elektrische oder hydraulische Bremse möglich.

Der Anhänger (1) kann ferner eine Stabilisierungseinrichtung (6) aufweisen, die mit den Radbremsen (21) zusammenwirkt, und die kritische Fahrsituationen mittels einer Sensorik detektiert und den Anhänger (1) durch geregelten Bremseingriff stabilisieren kann. Diese Sensorik oder sog. Schlingersensorik kann einen oder mehrere Sensoren, z.B. ESP-Sensoren, Gierratensensoren, Beschleunigungsaufnehmer oder dgl., aufweisen.

Die Stabilisierungseinrichtung (6) kann z.B. als Schlingerbremse ausgeführt und an einer Achse (12) angeordnet sein. Der Bremseingriff kann durch einen Bremsaktuator der Stabilisierungseinrichtung (6) bewirkt und durch ggf. überlagerte Beaufschlagung der Radbremsen (21) erfolgen. Der Bremsaktuator kann Bremszüge, insbesondere Bowdenzüge betätigen, die zu den Radbremsen (21) führen. Die Betätigung kann durch eine Relativbewegung zwischen dem inneren Seil und dem umgebenden Mantel durch Verstellen des Seils und/oder des Mantels erfolgen.

Ferner kann der Anhänger (1) eine Energieversorgung (36) aufweisen, die z.B. am Chassis (9), an der Achse (12), insbesondere am Achskörper (14) oder am Radschwinghebel (16), oder an einem Fahrzeugaufbau angeordnet sein kann.

Die Energieversorgung (36) kann einen Energiespeicher, z.B. eine Batterie oder einen Akku für elektrischen Strom aufweisen. Sie kann alternativ eine mit einer externen Stromquelle oder mit dem Zugfahrzeug (39) verbindbare Stromleitung beinhalten. Alternativ oder zusätzlich kann die Energieversorgung (36) in anderer Weise ausgebildet sein und für andere Energiearten, z.B. Gas, ausgelegt sein.

Die ein oder mehreren Antriebseinheiten (3,4) dienen zum bedarfsweisen Antreiben eines Fahrzeugrads (13). Sie kann/können mittels einer Betätigungseinrichtung (7), insbesondere einer Fernbedienung, bedient werden. Dieser Antrieb kann hilfsweise erfolgen und kann z.B. zum Rangieren eines abgekuppelten Anhängers (1) oder zur Antriebsunterstützung für eine externe Antriebseinrichtung dienen. Die Antriebseinheit (3,4) weist ein Antriebsmittel (22), einen Antriebsstrang (23) und ein auf das Fahrzeugrad (13) einwirkendes Treibmittel (24) auf. Diese sind miteinander wirkverbunden und können in unterschiedlicher Weise ausgebildet sein. Nachfolgend werden hierfür verschiedene Ausführungsbeispiele genannt. In Figur 3 bis 5 und Figur 6 bis 11 sind zwei unterschiedliche Varianten einer Antriebseinheiten (3,4) dargestellt und nachfolgend beschrieben.

Das Antriebsmittel (22) ist der Achse (12) zugeordnet. Der Antriebstrang (23) erstreckt sich entlang des Radschwinghebels (16). Dies ist insbesondere eine Erstreckung entlang des außerhalb des Achsköpers (14) befindlichen Schwinghebelbereichs bzw. des dortigen Gehäuses (17). Das Treibmittel (24) ist mit dem Antriebsmittel (22) wirkverbunden, vorzugsweise über den besagten Antriebsstrang (23).

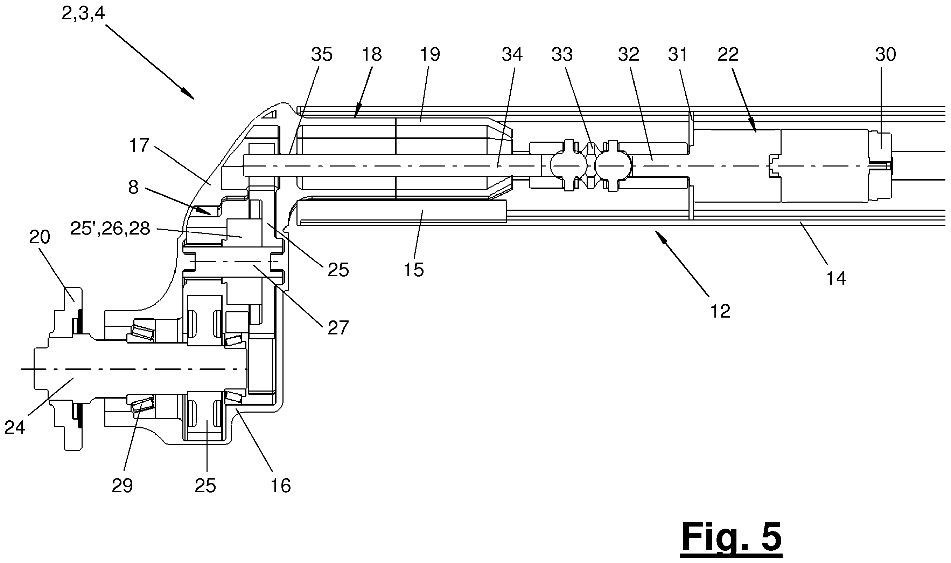

Das Treibmittel (24) ist in den gezeigten Ausführungsbeispielen als zentrale Antriebswelle des Fahrzeugrads (13) ausgebildet. Das Fahrzeugrad (13) ist mit der Antriebswelle (24) drehschlüssig verbunden, z.B. über eine am Wellenende befestigte Radnabe (20) gemäß Figur 3 bis 5 und Figur 6 bis 11. Die zentrale Antriebswelle (24) trägt das Fahrzeugrad (13) und stützt dieses gegenüber dem Radschwinghebel (16) ab. Die Antriebswelle (24) ist an einem unteren Endbereich des Radschwinghebels (16) mittels einer Lagerung (29) drehbar gelagert. Die Lagerung (29) kann z.B. gemäß Figur 5 als Kegelrollenlagerung ausgebildet sein.

Das Antriebsmittel (22) ist im Innenraum eines hohlen Achskörpers (14), insbesondere eines Achsrohrs angeordnet.

Das Antriebsmittel (22) ist steuerbar oder regelbar und ist mit einer Steuerung (5) verbunden. Das Antriebsmittel (22) kann in beliebig geeigneter Weise konstruktiv ausgebildet und am Achskörper (14) angeordnet und gegebenenfalls abgestützt sein. In den gezeigten Ausführungsbeispielen weist das Antriebsmittel (22) einen steuerbaren Motor und gegebenenfalls ein Übersetzungsgetriebe auf. Außerdem kann das Antriebsmittel (22) mit einer Bremse (30), z.B. einer Magnetbremse, versehen sein, die ebenfalls mit der Steuerung (5) verbunden sein kann. Der Antriebsmotor ist vorzugsweise als Elektromotor, insbesondere als Gleichstrommotor, ausgebildet. Das Untersetzungsgetriebe kann als Planetengetriebe oder als anderes vorzugsweise hochuntersetzendes Getriebe ausgeführt sein. Das Antriebsmittel (22) ist mit der Energieversorgung (36) verbunden.

Das Antriebsmittel (22) kann im Innenraum des Achskörpers (14) über eine Antriebslagerung (31) montiert und abgestützt sein. Diese kann z.B. als Lagerschild ausgeführt sein. Die Befestigung kann durch Klemmen, Schweißen oder in beliebig anderer geeigneter Weise erfolgen.

Das Antriebsmittel (22) ist vorzugsweise koaxial zum Achskörper (14) bzw. zur Schwenkachse des Radschwinghebels (16) angeordnet. Seine bevorzugt zentrale Abtriebswelle (32) kann sich durch den Lagerschild (31) erstrecken. Sie ist mit dem Antriebsstrang (23) in geeigneter Weise verbunden, z.B. durch eine in Figur 3 bis 5 und Figur 6 bis 11 gezeigte feste oder lösbare Kupplung (33), insbesondere ein Wellengelenk. Der Antriebsstrang (23) erstreckt sich bei diesen Varianten auch in den Achskörper (14) .

Der Antriebsstrang (23) ist um eine Dreh- oder Lagerachse der Lagerung (18) des Radschwinghebels (16) drehbar ausgebildet und angeordnet. Der Antriebsstrang (23) kann sich dabei mit den Schwenkbewegungen des Radschwinghebels (16) synchron mitbewegen. Die Antriebsverbindung kann während dieser Schwinghebelbewegungen zwängungsfrei aufrechterhalten werden.

In den gezeigten Ausführungsbeispielen erstreckt sich der Antriebsstrang (23) innenseitig durch einen hohlen Radschwinghebel (16). Der Radschwinghebel (16) weist hierfür ein entsprechend ausgebildetes hohles Gehäuse (17) auf. Dieses kann teilbar ausgebildet sein. Es weist Aufnahme- und Abstützmittel für die innenseitige Abstützung und Führung des Antriebsstrangs (23) und seiner Teile auf.

Der Antriebsstrang (23) ist antriebsseitig mit dem Antriebsmittel (22) und abtriebsseitig mit dem Treibmittel (24), insbesondere der zentralen Antriebswelle des Fahrzeugrads (13), wirkverbunden. Der Antriebsstrang (23) reicht bei der gezeigten Anordnung in den hohlen Achskörper (14) hinein und ist dort über die besagte Kupplung (33) mit der Abtriebswelle (32) verbunden. Der Antriebsstrang (23) weist hierfür eine Treibwelle (34) auf, die bevorzugt koaxial zum Achskörper (14) angeordnet ist und in dessen Innenraum ragt. Sie erstreckt sich dabei durch den hohlen Lagerzapfen (19). Sie ist am einen Ende mit der Abtriebswelle (32) direkt oder ggf. über die Kupplung (33) verbunden. Am anderen Endbereich oder an anderer geeigneter Stelle kann die Treibwelle (34) am Radschwinghebel (16) und/oder am Lagerzapfen (19) gelagert und abgestützt sein. In den gezeigten Ausführungsbeispielen ist ein Wellenlager (35) an einem Gehäusesteg an der Übergangsstelle zwischen dem Radschwinghebel (16) bzw. dem Gehäuse (17) und dem Lagerzapfen (19) angeordnet.

Der Antriebsstrang (23) kann in unterschiedlicher Weise ausgebildet sein. Vorzugsweise ist er als Getriebestrang ausgebildet. In den gezeigten Ausführungsbeispielen ist dies ein Zahnradgetriebe.

Der Antriebsstrang (23) kann mehrere Strangstufen (25,26) aufweisen. Diese sind in den gezeigten Ausführungsformen als Getriebestufen des Getriebestrangs, insbesondere des Zahnradgetriebes ausgebildet. Die Getriebestufen (25,26) können von Zahnrädern mit z.B. einer Stirnverzahnung gebildet werden. Hierdurch kann das von der drehenden Treibwelle (34) eingeleitete Dreh- und Antriebsmoment rechtwinklig umgesetzt und auf die zentrale Antriebswelle (24) übertragen werden. Diese in Figur 3 bis 5 und Figur 6 bis 11 gezeigte Ausbildung ist für eine Längslenkerachse besonders gut geeignet. Hierbei sind die Treibwelle (34) und die zentrale Antriebswelle (24) parallel ausgerichtet.

Bei einer Schräglenkerachse kann ein Winkelversatz zwischen der Zentralachse der Fahrzeugachse (12) und dem Treibelement (24), insbesondere der zentralen Antriebswelle, bestehen. In einem solchen Fall kann z.B. bei einem Zahnradgetriebe die Verzahnung und die Verbindung zum Treibelement (24) entsprechend ausgebildet sein und den Winkelversatz ausgleichen.

Das Zahnradgetriebe (23) kann z.B. gemäß Figur 3 bis 5 und Figur 6 bis 11 ein mit dem Ende der Treibwelle (34) verbundenes Ritzel aufweisen, das in einer ersten Getriebestufe (25) mit einem Stirnrad kämmt, welches auf einer Zwischenwelle (27) drehschlüssig angeordnet ist. Die erste, antriebseitige Getriebestufe (25) kann in beiden Varianten fest und nicht verstellbar sein. Die Zwischenwelle (27) kann eine Lagerachse bilden und drehbar mittels einer entsprechender Lageraufnahme im Inneren des Gehäuses (17) gelagert sein. Sie kann sich parallel zur Treibwelle (34) erstrecken.

Auf der Zwischenwelle (27) ist ein weiteres Zahnrad (25') drehschlüssig angeordnet, das in den Varianten von Figur 3 bis 5 und Figur 6 bis 11 unterschiedliche Ausgestaltungen und Funktionen hat.

Bei der ersten Variante von Figur 3 bis 5 wird hierdurch eine weitere Getriebestufe (26) gebildet. Dieses Zahnrad (25') kann unter Bildung einer dritten festen Getriebestufe (25) mit einem weiteren Zahnrad bevorzugt stirnseitig kämmen, welches auf der zentralen Antriebswelle (24) drehfest und bevorzugt zwischen den Lagerstellen der Wellenlagerung (29) angeordnet ist. Das Gehäuse (17) bzw. der Radschwinghebel (16) hat dabei die in Figur 5 verdeutlichte abgewinkelte Form.

Die Antriebseinheit (3,4) kann eine Aktivierungseinrichtung (8) zum bedarfsweisen und bevorzugt steuerbaren Aktivieren und Deaktivieren einer Antriebsverbindung mit dem Fahrzeugrad (13) aufweisen. Vorzugsweise ist die Aktivierungseinrichtung (8) dem Antriebsstrang (23) zugeordnet. Sie kann alternativ einem anderen Teil der Antriebseinheit (3,4) zugeordnet sein. Die Aktivierungseinrichtung (8) ist mit der Energieversorgung (36) und mit der Steuerung (5) verbunden und wird von letzterer betätigt.

Die Aktivierungseinrichtung (8) kann in unterschiedlicher Weise ausgebildet sein. In den gezeigten Ausführungsformen ist jeweils eine Strangstufe bzw. Getriebestufe (26) gesteuert aktivierbar und deaktivierbar ausgebildet. Sie kann ein Aktivierungsmittel (28) aufweisen, das z.B. als Schieberitzel mit einem Stellmittel ausgebildet ist. Das Schieberitzel kann von dem vorgenannten Zahnrad der Getriebestufe (26) gebildet werden.

Bei der ersten Variante von Figur 3 bis 5 ist das Zahnrad (25') drehschlüssig und axial verschieblich auf der Zwischenwelle (27) angeordnet und bildet das Aktivierungsmittel (28) bzw. Schieberitzel. Die Zwischenwelle (27) kann dabei außenseitig eine Stirn- oder Axialverzahnung aufweisen. Das Schieberitzel (28) kann mit dem Zahnrad der letzten Getriebestufe (25) auf der Antriebswelle (24) in und außer Verzahnungseingriff gebracht werden, wodurch die Antriebsverbindung zwischen dem Antriebsmittel (22) und dem Treibelement (24) aktiviert oder deaktiviert wird. Die Antriebsverbindung wird bei der Aktivierung auf Fahrbetrieb und bei der Deaktivierung auf Freilauf geschaltet.

Das Stellmittel kann in beliebig geeigneter Weise, z.B. als steuerbarer Stellantrieb, ausgebildet sein. Es kann in mehreren Richtungen wirksam sein und kann z.B. das Schieberitzel (28) definiert vor- und zurückschieben sowie positionieren. Eine Sensorik kann dabei die Position des Stellmittels und/oder des Schieberitzels (28) und damit den Aktivierungs- oder Deaktivierungszustand detektieren und signalisieren. Der Stellantrieb kann ein steuerbares Antriebsmittel, z.B. einen Elektromotor, und ein Übertragungsmittel, z.B. eine übersetzte Stellwelle, aufweisen.

Alternativ oder zusätzlich kann das Stellmittel bzw. der Stellantrieb gegen ein Rückstellelement, z.B. eine Feder, arbeiten. Die Federwirkung kann aus Sicherheitsgründen deaktivierend sein. Sie kann bei nicht betätigtem oder ausgefallenem Stellantrieb das Schieberitzel (28) in der besagten Weise deaktivieren. Der Stellantrieb kann in beliebig geeigneter Weise ausgebildet sein, z.B. als Elektromagnet oder als fluidischer Zylinder. Der Stellantrieb und ggf. die Sensorik sind ebenfalls mit der Energieversorgung (36) und mit der Steuerung (5) verbunden und werden von letzterer beaufschlagt.

Ferner kann die Aktivierungseinrichtung (8) eine manuelle Betätigung oder Löseeinrichtung für das Stellmittel für Notfälle, Stromausfall oder dgl. aufweisen.

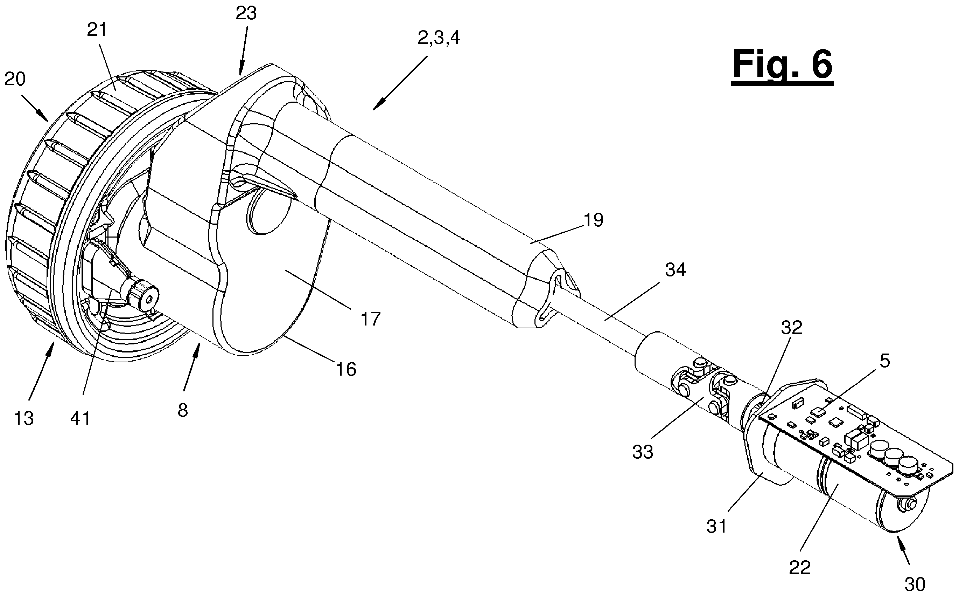

Figur 6 bis 11 zeigen die zweite Variante der Antriebseinheit (3,4). Die äußerliche Erscheinung gemäß Figur 6 ist ähnlich wie bei der ersten Variante von Figur 3 bis 5. Die beiden Varianten stimmen weitgehend überein, wobei Unterschiede insbesondere in der Ausgestaltung des Antriebsstrangs (23) und der Aktivierungseinrichtung (8) sowie der Lagerung (29) der Antriebswelle (24) bestehen.

Bei der ersten Variante ist die aktivierbare und deaktivierbare Strangstufe oder Getriebestufe (26) im mittleren Bereich des hier dreistufigen Antriebsstrangs (23) oder Getriebestrangs angeordnet. Die Antriebsverbindung kann hierbei zwischen einem Freilauf bei Deaktivierung und einer Fahrverbindung bei Aktivierung geschaltet werden. Bei der zweiten Variante ist die aktivierbare und deaktivierbare bzw. verstellbare Strangstufe oder Getriebestufe (26) am antriebseitigen Ende des Antriebs- oder Getriebestrangs (23) angeordnet.

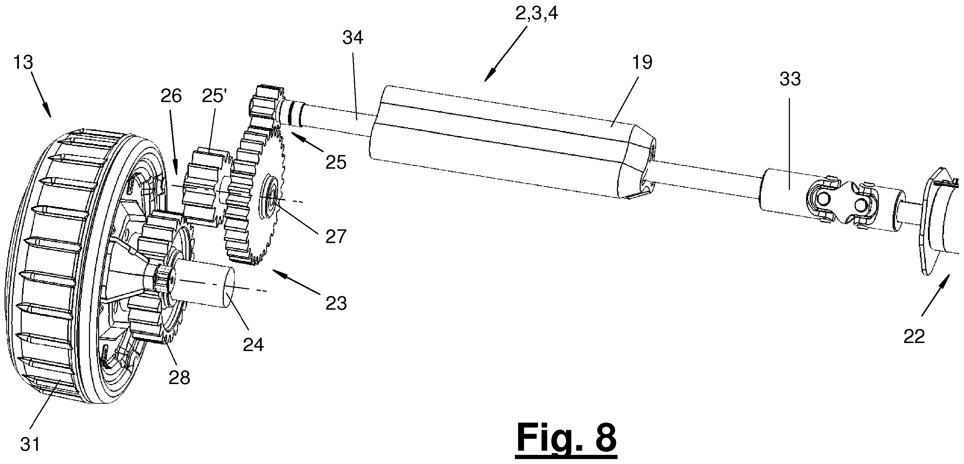

Bei der zweiten Variante von Figur 6 bis 11 ist das Zahnrad (25') ortsfest auf der Lagerachse oder Zwischenwelle (27) angeordnet und bildet ein Zwischerad. Durch die beiden auf der gemeinsamen Lagerachse oder Zwischenwelle (27) angeordneten Zahnräder wird eine zweite feste Getriebestufe gebildet. Die verstellbare bzw. aktivierbare und deaktivierbare Getriebestufe (26) wird zwischen dem Zahnrad (25') und einem auf der Antriebswelle (24) drehfest und axial verschieblich angeordneten Zahnrad gebildet. Dieses Zahnrad ist das Aktivierungsmittel (28) und bildet ein Schieberad, welches mit dem Zahnrad (25') in Eingriff und außer Eingriff gebracht werden kann. Figur 8 bis 11 zeigen diese Zahnradausbildung.

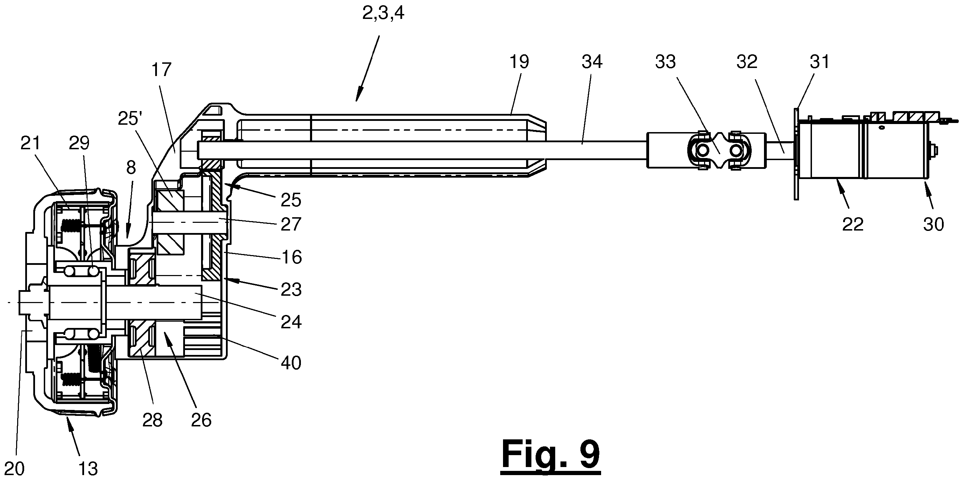

In Figur 8 und 9 ist die Antriebsverbindung auf Freilauf geschaltet und die Getriebestufe (26) deaktiviert. Das Aktivierungsmittel (28) ist durch einen Stellantrieb außer Eingriff mit dem Zahnrad (25') gebracht worden. Das Rad (13) kann im Zugbetrieb des Fahrzeugs (1) frei drehen.

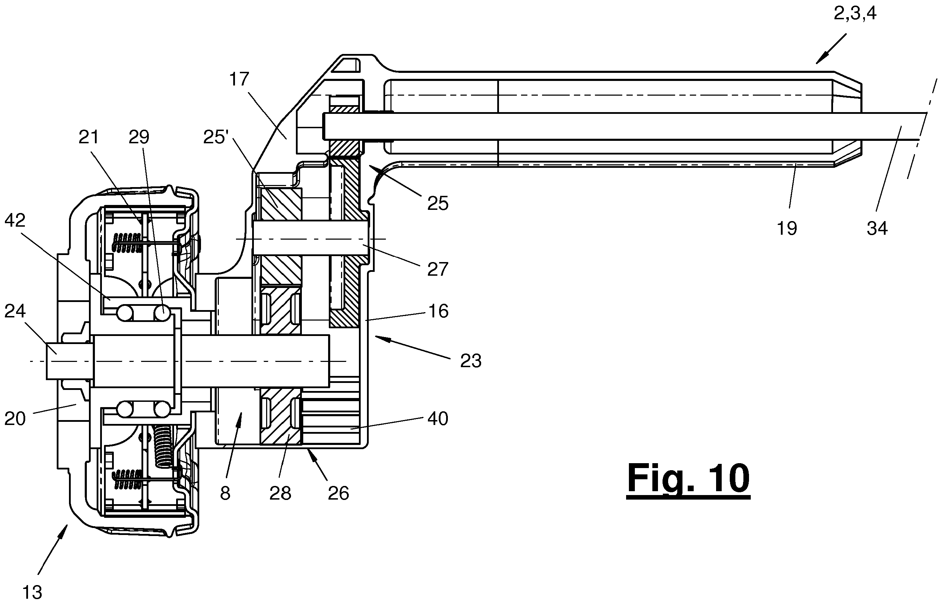

Figur 10 zeigt die eine aktivierte Stellung der Getriebestufe (26) für den Fahr- und Rangierbetrieb, wobei das Zahnrad (25') und das Aktivierungsmittel (28) bzw. Schieberad miteinander kämmen.

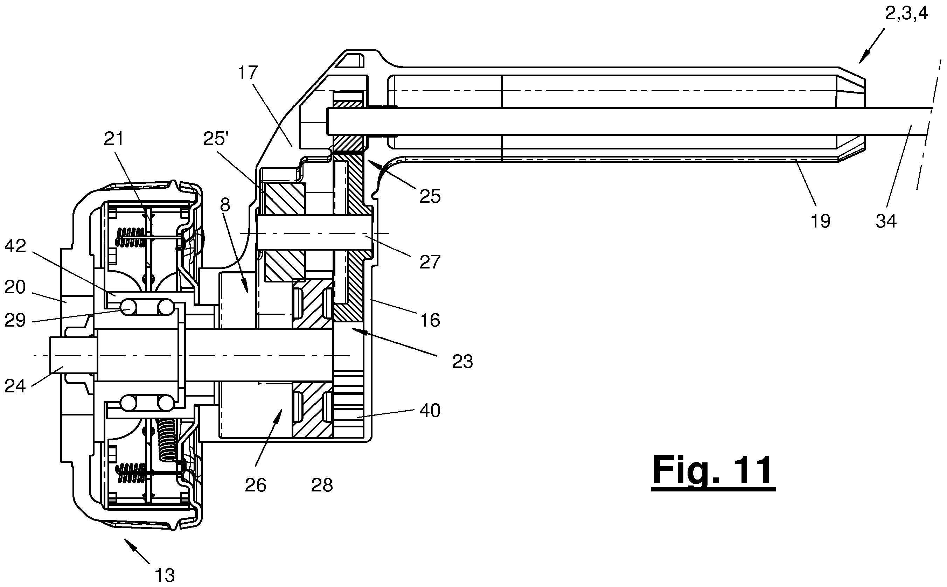

In Figur 11 ist eine dritte Stellung gezeigt, in der die Antriebsverbindung in eine Wegfahrsperre oder einen Diebstahlschutz geschaltet werden kann. Das Schieberad oder Aktivierungsmittel (28) ist hierbei einerseits mit dem Zahnrad (25') in einer Teilüberlappung kämmend verbunden und wirkt andererseits mit einer Gehäuseabstützung (40) am hohlen Gehäuse (17) des Radschwinghebels (16) zusammen. Die Gehäuseabstützung (40) hält das Schieberad (28) fest und blockiert den Antriebsstrang (23), insbesondere Getriebestrang. Die Gehäuseabstützung (40) kann in unterschiedlicher Weise ausgebildet sein. Im gezeigten Ausführungsbeispiel ist sie als Innenverzahnung im hohlen Gehäuse (17) ausgebildet und befindet sich im unteren Gehäusebereich und im Verschiebeweg des Schieberads (28) bzw. Aktivierungsmittels.

Bei der zweiten Variante ist die Lagerung (29) der Antriebswelle (24) geändert. Wie Figur 10 und 11 verdeutlichen, ist die Lagerung (29) im Bereich des Fahrzeugrads (13) und der Radbremse (21) angeordnet. Der Radschwinghebel (16) insbesondere sein Gehäuse (17), ist mit einem in den Radbereich ragenden Ansatz (42) verbunden, z.B. über eine Flanschverschraubung. Der Ansatz (42) ist konzentrisch zur Antriebswelle (24) angeordnet und nimmt die Lagerung (29) auf.

Am Ansatz (42) kann eine Radlastmessung durchgeführt werden. Dies kann z.B. durch Biegungs- oder Dehnungsmessung mit einer geeigneten lasterfassenden Sensorik erfolgen. Diese kann einen Dehnungsaufnehmer, z.B. Dehnmessstreifen, insbesondere laserstrukturierte Dehnmessstreifen, auf dem Ansatzmantel aufweisen. Ein alternativer oder zusätzlicher Sensor kann z.B. als magnetostriktiver Aufnehmer ausgebildet sein. Er erfasst Biegeverformungen des Ansatzes (42) und die damit einhergehenden Änderungen des Magnetfelds.

Das Ergebnis der Radlastmessung kann leitungsgebunden oder drahtlos kommuniziert werden. Es kann in unterschiedlicher Weise genutzt werden. Es kann z.B. ans Zugfahrzeug oder an andere Stelle gemeldet und verarbeitet werden. Es kann auch dort oder an anderer Stelle, z.B. an einem mobilen Bediengerät, einem Smartphon oder dgl. per App oder mit anderen Mitteln zur Anzeige gebracht werden.

Das Ergebnis der Radlastmessung kann der Stabilisierungseinrichtung (6) zugeführt werden. Diese kann die Radlasten bzw. das ermittelte Fahrzeuggewicht als Zusatzinformation neben den Signalen der Schlingersensorik zur Steuerung und Regelung der Höhe und Dynamik der Bremskraft und der Bremsbetätigung für die Stabilisierung des Fahrzustands verarbeiten. Die Radlasten bzw. das ermittelte Fahrzeuggewicht können während der Fahrt oder auch vor oder bei Fahrbeginn und ggf. im Stand des Fahrzeugs detektiert werden.

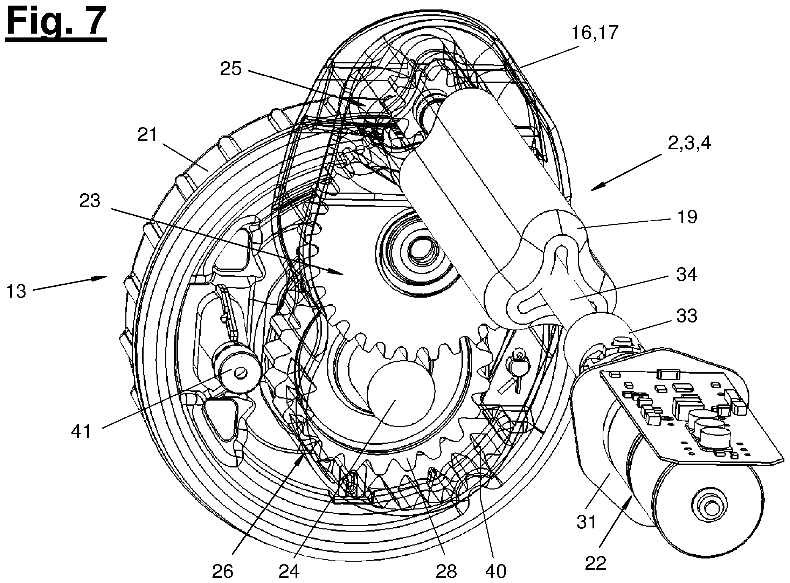

Bei der zweiten Variante kann auch die Ausbildung der Radbremse (21) geändert sein, die z.B. wie bei der ersten Variante als Trommelbremse ausgebildet ist. Der Bremsschild ist mit dem Gehäuse (17) und dem Ansatz (42) verbunden. Figur 9 bis 11 zeigen diese Ausbildung. In Figur 6 und 7 ist auch der am Bremsschild angeordnete Bremsanschluss (41) für den Bremszug (nicht dargestellt) ersichtlich. Er ist seitlich neben dem Radschwinghebel (16) angeordnet.

Die Radnabe (20) ist mit der Antriebswelle (24) über eine Hülse drehfest und axialfest verbunden. Die Hülse kann den inneren Lagersitz für die Lagerung (29) bilden. Der vordere Naben- oder Hülsenflansch kann mit der Bremstrommel und der vorderen Nabenanbaufläche für das Fahrzeugrad (13) verbunden sein.

Die Antriebseinheit (3,4) kann in allen Varianten eine eigene Energieversorgung aufweisen. Vorzugsweise ist sie mit der Energieversorgung (36) des Fahrzeugs (1) verbunden. Eine eigene Energieversorgung kann z.B. am Achskörper (14) und/oder am Radschwinghebel (16) angeordnet sein.

Die Achse (12) mit mindestens einer Antriebseinheit (3,4) kann eine eigenständige Baueinheit darstellen. Sie bildet auch eine eigene Erfindung.

Die Achse (12) mit den ein oder mehreren Antriebseinheiten (3,4) kann an ein anderweitig hergestelltes Fahrzeug (1), insbesondere ein anderweitig hergestelltes Chassis (9), angebaut werden. Der Anbau der Achse (12) kann im Wege einer Erstausrüstung herstellerseitig erfolgen. Die erfindungsgemäße Achse (12) kann auch nachgerüstet und gegen eine konventionelle Fahrzeugachse ausgetauscht werden.

Statt des gezeigten einachsigen Fahrgestells (9) bzw. Fahrzeugs (1) kann auch eine Mehrachsanordnung, z.B. als Tandemachse oder Tripelachse, vorgesehen sein. Hierbei können eine einzelne oder mehrere Achsen (12) in der erfindungsgemäßen Weise ausgestaltet und mit einer oder mehreren Antriebseinheiten (3,4) versehen sein. Bei einer Mehrfachachsanordnung kann auch nur eine erfindungsgemäße und angetriebene Achse (12) vorhanden sein und mit einer konventionellen antriebslosen Laufachse kombiniert werden.

Die erfindungsgemäße Achse (12) kann in der vorerwähnten Weise als Halbachse oder Stummelachse mit nur einem Radschwinghebel (16) und einer Antriebseinheit (3,4) ausgebildet sein. Sie kann alternativ gemäß der gezeigten Ausführungsbeispiele ausgebildet sein und zwei endseitig gelagerte Radschwinghebel (16) sowie eine linke Antriebseinheit (3) und eine rechte Antriebseinheit (4) aufweisen. Diese Antriebseinheiten (3,4) können autonom und in der vorbeschriebenen Weise ausgebildet sein. Die Antriebseinheiten (3,4) können dabei mit jeweils einer eigenen Steuerung oder mit einer gemeinsamen Steuerung (5) verbunden sein. Gleiches gilt für die ggf. vorhandenen Aktivierungseinrichtungen (8).

In einer anderen und nicht dargestellten Ausführungsform können zwei an einer Achse (12) angeordnete Antriebseinheiten (3,4) ein gemeinsames Antriebsmittel (22) aufweisen. Das Antriebsmittel (22) hat in diesem Fall zwei entgegengesetzt gerichtete Abtriebswellen (32). Es ist bevorzugt zentral in dem Achskörper (14) angeordnet. Dieser hat vorzugsweise eine gerade Form.

Die Abtriebswellen (32) sind jeweils mit einem Antriebsstrang (23) und einem Treibelement (24) verbunden. Die Fahrzeugräder (13) können synchron angetrieben werden. Für eine Kurvenfahrt oder ein Wenden kann die Antriebsverbindung auf der linken und rechten Seite der Achse (12) in unterschiedlicher Weise und vorzugsweise gesteuert erfolgen. Dies ist z.B. durch die Aktivierungseinrichtungen (8) und ein gesteuertes Aktivieren und Deaktivieren der besagten Antriebsverbindungen, insbesondere der Antriebsstränge (23) möglich. Hierbei kann auch eine Getriebesynchronisierung erfolgen.

Alternativ sind andere Ausgestaltungsmöglichkeiten gegeben, z.B. durch zusätzliche steuerbare Kupplungen an den Antriebseinheiten (3,4). Hierfür können z.B. die Kupplungen (33) modifiziert werden. Sie haben dann eine entsprechende Verbindung mit der Steuerung (5) und der Energieversorgung (36).

Mehrere, z.B. zwei oder vier, Antriebseinheiten (3,4) können einen Hilfsantrieb (2), insbesondere einen Rangierantrieb, bilden. Die Antriebseinheiten (3,4) bzw. der Hilfsantrieb (2) können im Wege der Erstausrüstung an einem Fahrgestell oder einem Fahrzeug (1) angeordnet werden. Sie können alternativ nachgerüstet werden. Hierbei kann z.B. eine Antriebseinheit (3,4) an einer vorhandenen Achse (12) nachgerüstet werden. Hierbei kann z.B. der Achskörper (14) behalten und der oder die Radschwinghebel (16) getauscht sowie mit dem Antriebsmittel (22), dem Antriebsstrang (23) und dem ggf. modifizierten Treibmittel (24) versehen werden.

Bei der Bildung eines Hilfsantriebs (2) werden die zwei oder mehr Antriebseinheiten (3,4) beidseits bzw. links und rechts am Fahrgestell (9) bzw. am Fahrzeug (1) angeordnet. In der bevorzugten Ausführungsform mit autonomen Antriebseinheiten (3,4) werden diese vorzugsweise mit einer gemeinsamen Steuerung (5) verbunden.

Die Steuerung (5) kann an beliebig geeigneter Stelle angeordnet sein. Sie kann z.B. mit einer Steuerung der vorerwähnten Stabilisierungseinrichtung (6) zusammengefasst werden. Diese zusammengefasste Steuerung kann wiederum an beliebiger Stelle des Fahrgestells (9) bzw. Fahrzeugs (1) angeordnet werden, z.B. an dem in Figur 1 und 2 gezeigten Bremsaktuator der Stabilisierungseinrichtung (6). Außerdem ist eine Zuordnung einer solchen gemeinsamen oder zusammengefassten Steuerung (5) an einer Antriebseinheit (3,4), insbesondere an deren Antriebsmittel (22) möglich. Figur 6 zeigt bespielhaft eine solche Anordnung. Das Antriebsmittel (22) kann ohnehin eine Motorsteuerung, insbesondere eine Steuerplatine, aufweisen. An dieser können auch die Steuermittel der Steuerung (5) angeordnet sein.

Die Kommunikation der Steuersignale und eventuell weiterer Melde- oder Informationssignale oder dgl. kann in beliebig geeigneter Weise, insbesondere leitungsgebunden oder drahtlos, z.B. per Funk, erfolgen. Hierüber kann z.B. eine Steuerung (5) mit den ein oder mehreren Antriebsmitteln (22) und ggf. den ein oder mehreren Aktivierungseinrichtungen (8) kommunizieren.

Die einzelne, gemeinsame oder zusammengefasste Steuerung (5) ist mit der Betätigungseinrichtung (7) bzw. Fernbedienung verbunden. Diese kann fahrzeugfest oder mobil angeordnet sein. Die Betätigungseinrichtung (7) kann ein oder mehrere Betätigungselemente, z.B. Tasten, Touchpad, Joystick oder dgl. aufweisen. Sie kann ferner eine geeignete Anzeige, z.B. einen Monitor, beinhalten. Ein oder mehrere weitere Anzeigen können auch an anderer Stelle, z.B. am Fahrgestell (9) und/oder am Fahrzeugaufbau angeordnet sein.

Die Betätigungseinrichtung (7) kann eine eigene Intelligenz nebst Programm- und Datenspeichern aufweisen. Eine damit ausgerüstete mobile Fernbedienung (7) kann z.B. als Smartphone, Tablet oder dgl. ausgeführt sein. Eine intelligente Betätigungseinrichtung (7) kann zur Verarbeitung von Apps geeignet und ausgebildet sein. An der oder den besagten Anzeigen können Zustands- oder Betriebsinformationen der Antriebseinheiten (3,4), des Hilfsantriebs (2) und/oder auch der Stabilisierungseinrichtung (6) und/oder anderer Informationsgeber am Fahrgestell (9) oder am Fahrzeug (1) angezeigt werden. Insbesondere kann die Aktivierung oder Deaktivierung der Antriebsverbindung mit dem Fahrzeugrad (13) angezeigt werden.

Andere Informationsgeber können z.B. Sensoren am Fahrgestell (9) bzw. Fahrzeug (1) sein, z.B. Parksensoren, Kameras, lastaufnehmende Sensoren an den Fahrzeugrädern (13) oder an anderer Stelle. Informationsgeber können auch Sensoren zur Erfassung von Betriebszuständen des Fahrzeugs (1), z.B. des Bremsbelagverschleißes, der Temperatur an den Radbremsen oder an anderer Stelle, des Wartungsbedarfs, der Stützlast oder dgl. sein. Ferner kann der Ankuppelzustand eines Anhängers (1) am Zugfahrzeug (39) sensorisch erfasst werden, z.B. an der Kugelkopfkupplung. Diese Informationsgeber können ebenfalls mit der Steuerung (5) verbunden sein. Die besagte Steuerung (5) kann ein umfassendes Fahrzeugmanagement durchführen.

Mittels solcher Informationsgeber können automatisch Gefahrensituationen detektiert und Sicherheitsmaßnahmen realisiert werden. Z.B. kann der Hilfsantrieb (2) und/oder die Antriebsverbindung mit dem Fahrzeugrad (13) in einem sensorisch erfassten Gefahrenfall, z.B. in Gespannfahrt oder beim Ankuppeln eines Anhängers (1), automatisch abgeschaltet bzw. deaktiviert werden.

Mittels der Betätigungseinrichtung (7) können die ein oder mehreren Antriebseinheiten (3,4) und der Hilfsantrieb (2) gesteuert werden. Hierdurch kann das entsprechend ausgerüstete Fahrzeug (1) beim Rangieren in geeigneter Weise vorwärts und rückwärts, geradeaus und in beliebigen Kurvenradien bewegt und gelenkt sowie auf der Stelle gewendet werden.

Hierfür sind insbesondere autonome Antriebseinheiten (3,4) mit eigenen Antriebsmitteln (22) von Vorteil. Die Steuerung (5) kann entsprechende Steuerprogramme für die Umsetzung der Steuerfunktionen haben. Sie kann außerdem die ein oder mehreren Bremsen (30) ansteuern und dadurch das Fahrzeug (1) bedarfsweise aus der Fahrt bis zum Stillstand abbremsen sowie ggf. als Parkbremse bei stehenden Fahrzeug (1) wirken.

Der Antriebsstrang (23) kann mit oder ohne Selbsthemmung ausgeführt sein. Er kann dadurch die Bremswirkung im Stand ggf. unterstützen. In einer anderen Ausführungsform können die Antriebsmittel (22) ein generatorisches Bremsen ermöglichen. Dies kann auch zur autarken Energiegewinnung und zur Ansteuerung einer Antriebsfunktion benutzt werden, falls sich das Fahrzeug (1) unerwünscht in Bewegung setzt. Die Antriebsfunktion kann dieser Eigenbewegung entgegenwirken und dadurch das Fahrzeug (1) wieder zum Stillstand bringen. Daneben sind beliebige andere Steuer- und Antriebsfunktionen möglich.

Ein Antriebsstrang (23), z.B. ein ggf. gekapselter Riemen- oder Kettentrieb, kann außerhalb des Radschwinghebels (16) angeordnet sein. Er kann dabei ein koaxial zur Schwinghebelachse drehbar gelagertes Strangteil, z.B. ein Treib- oder Zahnrad aufweisen, das außenseitig am Achskörper (14) oder am Chassis (9) gelagert ist. Ein anderes entsprechendes Strangteil kann extern am Radschwinghebel (16) gelagert und mit dem Treibmittel (24), z.B. einem externen Fortsatz der Antriebswelle, treibend verbunden sein.

In Abwandlung der gezeigten Ausführungsvarianten kann das Antriebsmittel (22) im Innenraum des hohlen Lagerzapfens (19) oder Innenrohrs angeordnet sein. In weiterer Abwandlung kann das Antriebsmittel (22) im hohlen Achsköper (14) angeordnet und dabei am Ende des Lagerzapfens (19) oder Innenrohrs außenseitig montiert sein. Der Radschwinghebel (16) und das Antriebsmittel (22) können dabei eine Bau- und Montageeinheit bilden. Das Antriebsmittel (22) kann außerdem generell einen anderen Antriebsmotor, z.B. einen Fluidmotor, aufweisen.

### BEZUGSZEICHENLISTE

- 1: Fahrzeug, Anhänger
- 2: Rangierantrieb, Hilfsantrieb
- 3: Antriebseinheit links
- 4: Antriebseinheit rechts
- 5: Steuerung
- 6: Stabilisierungseinrichtung, Schlingerbremse
- 7: Betätigungseinrichtung, Fernbedienung
- 8: Aktivierungseinrichtung
- 9: Fahrgestell, Chassis
- 10: Deichsel
- 11: Längsträger
- 12: Achse, Radlenkerachse
- 13: Rad, Fahrzeugrad
- 14: Achskörper, Achsrohr
- 15: Federung, Gummifederung
- 16: Radschwinghebel
- 17: Gehäuse
- 18: Lagerung Schwinghebel
- 19: Lagerzapfen, Innenrohr
- 20: Radnabe
- 21: Radbremse, Trommelbremse
- 22: Antriebsmittel, Motor
- 23: Antriebsstrang, Getriebestrang
- 24: Treibmittel, Antriebswelle Rad
- 25: Getriebestufe fest
- 25': Zahnrad, Zwischenrad
- 26: Getriebestufe deaktivierbar
- 27: Lagerachse, Zwischenwelle
- 28: Aktivierungsmittel, Schieberitzel
- 29: Lagerung Antriebswelle
- 30: Bremse
- 31: Antriebslagerung, Lagerschild
- 32: Abtriebswelle
- 33: Kupplung, Wellengelenk
- 34: Treibwelle
- 35: Wellenlagerung
- 36: Energieversorgung
- 37: Bremseinrichtung
- 38: Anhängerkupplung
- 39: Zugfahrzeug
- 40: Gehäuseabstützung, Innenverzahnung
- 41: Bremsanschluss
- 42: Ansatz

## Patentansprüche

1. Antriebseinheit für einen Hilfsantrieb (2) eines Fahrzeugs (1), insbesondere eines Anhängers, der eine Achse (12) mit einem Achskörper (14), einem Fahrzeugrad (13) und einem dazwischen angeordneten Radschwinghebel (16) aufweist, wobei die Antriebseinheit (3,4) das Fahrzeugrad (13) bedarfsweise antreibt und ein Antriebsmittel (22) sowie einen Antriebsstrang (23) und ein auf das Fahrzeugrad (13) einwirkendes Treibmittel (24) aufweist, wobei das Antriebsmittel (22) der Achse (12) zugeordnet ist, **dadurch**
**gekennzeichnet, dass** das Antriebsmittel (22) in einem hohlen Achskörper (14) angeordnet ist und der Antriebsstrang (23) sich entlang des Radschwinghebels (16) erstreckt.

2. Antriebseinheit nach Anspruch 1, **dadurch gekennzeichnet, dass** das Treibmittel (24) als zentrale Antriebswelle des Fahrzeugrads (13) ausgebildet ist und bevorzugt am einen Endbereich des Radschwinghebels (16) mittels einer Lagerung (29) drehbar gelagert ist.

3. Antriebseinheit nach Anspruch 1 oder 2, **dadurch gekennzeichnet, dass** der Antriebsstrang (23) um eine Lagerachse einer Lagerung (19) des Radschwinghebels (16) am Achskörper (14) drehbar angeordnet und ausgebildet ist.

4. Antriebseinheit nach Anspruch 1, 2 oder 3, **dadurch gekennzeichnet, dass** der Antriebsstrang (23) sich innenseitig durch einen hohlen Radschwinghebel (16) erstreckt.

5. Antriebseinheit nach einem der vorhergehenden Ansprüche, **dadurch gekennzeichnet, dass** der Antriebsstrang (23) antriebseitig mit dem Antriebsmittel (22) und abtriebseitig mit dem Treibmittel (24), insbesondere der zentralen Antriebswelle des Fahrzeugrads (13), wirkverbunden ist.

6. Antriebseinheit nach einem der vorhergehenden Ansprüche, **dadurch gekennzeichnet, dass** die Antriebseinheit (3,4) eine Aktivierungseinrichtung (8) zum bedarfsweisen Aktivieren und Deaktivieren einer Antriebsverbindung mit dem Fahrzeugrad (13) aufweist.

7. Antriebseinheit nach einem der vorhergehenden Ansprüche, **dadurch gekennzeichnet, dass** der Antriebsstrang (23) mehrere Strangstufen (25,26) und eine gesteuert aktivierbare und deaktivierbare Strangstufe (26) aufweist.

8. Antriebseinheit nach einem der vorhergehenden Ansprüche, **dadurch gekennzeichnet, dass** das Antriebsmittel (22) einen steuerbaren Motor und ggf. ein Untersetzungsgetriebe und eine Bremse (30) aufweist.

9. Achse für ein Fahrzeug (1), insbesondere einen Anhänger, wobei die Achse (12) einen Achskörper (14) mit einem Radschwinghebel (16) aufweist, **dadurch gekennzeichnet, dass** die Achse (12) eine zugeordnete Antriebseinheit (3,4) für einen Hilfsantrieb (2) des Fahrzeugs (1) aufweist, wobei die Antriebseinheit (3,4) nach einem der Ansprüche 1 bis 8 ausgebildet ist.

10. Achse nach Anspruch 9, **dadurch gekennzeichnet, dass** die Achse (12) zwei endseitige Radschwinghebel (16) und zwei Antriebseinheiten (3,4) aufweist, wobei der Radschwinghebel (16) ein hohles Gehäuse (17) aufweist, das zur Aufnahme des Antriebsstrangs (23) ausgebildet ist.

11. Hilfsantrieb für ein Fahrzeug (1), insbesondere Rangierantrieb für einen Anhänger, wobei der Hilfsantrieb (2) mehrere Antriebseinheiten (3,4) aufweist, von denen jeweils eine bedarfsweise ein Fahrzeugrad (13) antreibt, **dadurch gekennzeichnet, dass** die Antriebseinheiten (3,4) nach einem der Ansprüche 1 bis 8 ausgebildet sind.

12. Hilfsantrieb nach Anspruch 11, **dadurch gekennzeichnet, dass** der Hilfsantrieb (2) mit einer Stabilisierungseinrichtung (6), insbesondere einer Schlingerbremse, gekoppelt ist, insbesondere über eine gemeinsame Steuerung (5) und/oder über eine gemeinsame Betätigungseinrichtung (7), insbesondere eine Fernbedienung.

13. Fahrzeug, insbesondere Anhänger, mit einer Achse (12), die einen Achskörper (14), ein Fahrzeugrad (13) und einen dazwischen angeordneten Radschwinghebel (16) aufweist, sowie mit einer Antriebseinheit (3,4), die das Fahrzeugrad (13) bedarfsweise antreibt, **dadurch gekennzeichnet, dass** die Achse (12) nach einem der Ansprüche 9 oder 10 ausgebildet ist.

14. Fahrzeug nach Anspruch 13, **dadurch gekennzeichnet, dass** das Fahrzeug (1) einen Hilfsantrieb (2) nach einem der Ansprüche 11 oder 12 aufweist.

15. Verfahren zum bedarfsweisen Antreiben eines Fahrzeugrads (13) eines Fahrzeugs (1) mit einer Antriebseinheit (3,4) für einen Hilfsantrieb (2) des Fahrzeugs (1), insbesondere eines Anhängers, wobei das Fahrzeug (1) eine Achse (12) mit einem Achskörper (14) und einem Radschwinghebel (16) aufweist und die Antriebseinheit (3,4) ein Antriebsmittel (22) sowie einen Antriebsstrang (23) und ein auf das Fahrzeugrad (13) einwirkendes Treibmittel (24) aufweist, wobei das Antriebsmittel (22) der Achse (12) zugeordnet ist, **dadurch gekennzeichnet, dass** das Antriebsmittel (22) in einem hohlen Achskörper (14) angeordnet ist und der Antriebsstrang (23) sich entlang des Radschwinghebels (16) erstreckt.

## Claims

1. Drive unit for an auxiliary drive (2) of a vehicle (1), in particular of a trailer , which drive unit has an axle (12) with an axle member (14), a vehicle wheel (13) and disposed therebetween a wheel swing arm (16), wherein the drive unit (3, 4) drives the vehicle wheel (13) on demand and has a driving means (22) as well as a drive train (23), and a propulsion means (24) which acts on the vehicle wheel (13), wherein the driving means (22) is assigned to the axle (12), **characterized in that** the driving means (22) is disposed in a hollow axle member (14) and the drive train (23) extends along the wheel swing arm (16).

2. Drive unit according to Claim 1, **characterized in that** the propulsion means (24) is configured as a central drive shaft of the vehicle wheel (13) and, by means of a mounting (29), is preferably mounted so as to be rotatable on an end region of the wheel swing arm (16).

3. Drive unit according to Claim 1 or 2, **characterized in that** the drive train (23) is disposed and configured on the axle member (14) so as to be rotatable about a mounting axle of a mounting (19) of the wheel swing arm (16).

4. Drive unit according to Claim 1, 2 or 3, **characterized in that** the drive train (23) extends through the inside of a hollow wheel swing arm (16) .

5. Drive unit according to one of the preceding claims, **characterized in that** the drive train (23) on the input side is operatively connected to the driving means (22), and on the output side is operatively connected to the propulsion means (24), in particular the central drive shaft of the vehicle wheel (13).

6. Drive unit according to one of the preceding claims, **characterized in that** the drive unit (3, 4) has an activation installation (8) for activating and deactivating on demand a drive connection to the vehicle wheel (13).

7. Drive unit according to one of the preceding claims, **characterized in that** the drive train (23) has a plurality of drive train stages (25, 26) and one drive train stage (26) which is able to be activated and deactivated in a controlled manner.

8. Drive unit according to one of the preceding claims, **characterized in that** the driving means (22) has a controllable motor and optionally a reduction gear and a brake (30).

9. Axle for a vehicle (1), in particular for a trailer, wherein the axle (12) has an axle member (14) with a wheel swing arm (16), **characterized in that** the axle (12) has an assigned drive unit (3, 4) for an auxiliary drive (2) of the vehicle (1), wherein the drive unit (3, 4) is configured according to one of Claims 1 to 8.

10. Axle according to Claim 9, **characterized in that** the axle (12) has two end-proximal wheel swing arms (16) and two drive units (3, 4), wherein the wheel swing arm (16) has a hollow casing (17) which is configured for receiving the drive train (23).

11. Auxiliary drive for a vehicle (1), in particular a manoeuvring drive for a trailer, wherein the auxiliary drive (2) has a plurality of drive units (3, 4) of which one drives in each case on demand one vehicle wheel (13), **characterized in that** the drive units (3, 4) are configured according to one of Claims 1 to 8.

12. Auxiliary drive according to Claim 11, **characterized in that** the auxiliary drive (2), in particular by way of a common controller (5) and/or by way of a common actuating installation (7), in particular a remote control, is coupled to a stabilizing installation (6), in particular an anti-sway brake.

13. Vehicle, in particular trailer, having an axle (12) which has an axle member (14), a vehicle wheel (13) and disposed therebetween a wheel swing arm (16), as well as having a drive unit (3, 4) which drives on demand the vehicle wheel (13), **characterized in that** the axle (12) is configured according to one of Claims 9 or 10.

14. Vehicle according to Claim 13, **characterized in that** the vehicle (1) has an auxiliary drive (2) according to one of Claims 11 or 12.

15. Method for driving on demand a vehicle wheel (13) of a vehicle (1) by way of a drive unit (3, 4) for an auxiliary drive (2) of the vehicle (1), in particular of a trailer, wherein the vehicle (1) has an axle (12) with an axle member (14) and a wheel swing arm (16), and the drive unit (3, 4) has a driving means (22) as well as a drive train (23), and a propulsion means (24) which acts on the vehicle wheel (13), wherein the driving means (22) is assigned to the axle (12), **characterized in that** the driving means (22) is disposed in a hollow axle member (14) and the drive train (23) extends along the wheel swing arm (16).

## Revendications

1. Unité d'entraînement pour un entraînement auxiliaire (2) d'un véhicule (1), en particulier d'une remorque, qui comprend un essieu (12) avec un corps d'essieu (14), une roue de véhicule (13) et un levier oscillant de roue (16) agencé entre eux, l'unité d'entraînement (3, 4) entraînant la roue de véhicule (13) en cas de besoin et comprenant un moyen d'entraînement (22), ainsi qu'une chaîne cinématique (23) et un moyen de propulsion (24) agissant sur la roue de véhicule (13), le moyen d'entraînement (22) étant associé à l'essieu (12), **caractérisée en ce que** le moyen d'entraînement (22) est agencé dans un corps d'essieu creux (14) et la chaîne cinématique (23) s'étend le long du levier oscillant de roue (16).

2. Unité d'entraînement selon la revendication 1, **caractérisée en ce que** le moyen de propulsion (24) est configuré en tant qu'arbre d'entraînement central de la roue de véhicule (13) et est de préférence monté rotatif au niveau d'une zone d'extrémité du levier oscillant de roue (16) au moyen d'un palier (29).

3. Unité d'entraînement selon la revendication 1 ou 2, **caractérisée en ce que** la chaîne cinématique (23) est agencée et configurée rotative autour d'un axe de palier d'un palier (19) du levier oscillant de roue (16) sur le corps d'essieu (14).

4. Unité d'entraînement selon la revendication 1, 2 ou 3, **caractérisée en ce que** la chaîne cinématique (23) s'étend du côté intérieur à travers un levier oscillant de roue creux (16).

5. Unité d'entraînement selon l'une quelconque des revendications précédentes, **caractérisée en ce que** la chaîne cinématique (23) est reliée fonctionnellement côté entrée avec le moyen d'entraînement (22) et côté sortie avec le moyen de propulsion (24), en particulier l'arbre d'entraînement central de la roue de véhicule (13) .

6. Unité d'entraînement selon l'une quelconque des revendications précédentes, **caractérisée en ce que** l'unité d'entraînement (3, 4) comprend un appareil d'activation (8) pour l'activation et la désactivation selon les besoins d'une liaison d'entraînement avec la roue de véhicule (13).

7. Unité d'entraînement selon l'une quelconque des revendications précédentes, **caractérisée en ce que** la chaîne cinématique (23) comprend plusieurs étages de chaîne (25, 26) et un étage de chaîne (26) activable et désactivable de manière commandée.

8. Unité d'entraînement selon l'une quelconque des revendications précédentes, **caractérisée en ce que** le moyen d'entraînement (22) comprend un moteur commandable et éventuellement une transmission réductrice et un frein (30).

9. Essieu pour un véhicule (1), en particulier une remorque, l'essieu (12) comprenant un corps d'essieu (14) avec un levier oscillant de roue (16), **caractérisé en ce que** l'essieu (12) comprend une unité d'entraînement associée (3, 4) pour un entraînement auxiliaire (2) du véhicule (1), l'unité d'entraînement (3, 4) étant configurée selon l'une quelconque des revendications 1 à 8.

10. Essieu selon la revendication 9, **caractérisé en ce que** l'essieu (12) comprend deux leviers oscillants de roue (16) à l'extrémité et deux unités d'entraînement (3, 4), le levier oscillant de roue (16) comprenant un boîtier creux (17), qui est configuré pour la réception de la chaîne cinématique (23).

11. Entraînement auxiliaire pour un véhicule (1), en particulier entraînement de manœuvre pour une remorque, l'entraînement auxiliaire (2) comprenant plusieurs unités d'entraînement (3, 4), parmi lesquelles à chaque fois une entraîne une roue de véhicule (13) selon les besoins, **caractérisé en ce que** les unités d'entraînement (3, 4) sont configurées selon l'une quelconque des revendications 1 à 8.

12. Entraînement auxiliaire selon la revendication 11, **caractérisé en ce que** l'entraînement auxiliaire (2) est couplé avec un appareil de stabilisation (6), en particulier un frein à roulement, en particulier par l'intermédiaire d'une commande commune (5) et/ou par l'intermédiaire d'un appareil d'actionnement commun (7), en particulier d'une commande à distance.

13. Véhicule, en particulier remorque, avec un essieu (12), qui comprend un corps d'essieu (14), une roue de véhicule (13) et un levier oscillant de roue (16) agencé entre eux, ainsi qu'avec une unité d'entraînement (3, 4), qui entraîne la roue de véhicule (13) selon les besoins, **caractérisé en ce que** l'essieu (12) est configuré selon l'une quelconque des revendications 9 ou 10.

14. Véhicule selon la revendication 13, **caractérisé en ce que** le véhicule (1) comprend un entraînement auxiliaire (2) selon l'une quelconque des revendications 11 ou 12.

15. Procédé d'entraînement selon les besoins d'une roue de véhicule (13) d'un véhicule (1) avec une unité d'entraînement (3, 4) pour un entraînement auxiliaire (2) du véhicule (1), en particulier d'une remorque, le véhicule (1) comprenant un essieu (12) avec un corps d'essieu (14) et un levier oscillant de roue (16), et l'unité d'entraînement (3, 4) comprenant un moyen d'entraînement (22), ainsi qu'une chaîne cinématique (23) et un moyen de propulsion (24) agissant sur la roue de véhicule (13), le moyen d'entraînement (22) étant associé à l'essieu (12), **caractérisé en ce que** le moyen d'entraînement (22) est agencé dans un corps d'essieu creux (14) et la chaîne cinématique (23) s'étend le long du levier oscillant de roue (16).
